Europäisches Patentamt

(19) European Patent Office    (11) Publication number: **0 042 393**

Office européen des brevets                                    **B1**

(12)                        **EUROPEAN PATENT SPECIFICATION**

(45) Date of publication of patent specification: **30.10.85**    (51) Int. Cl.⁴: **G 01 N 30/92**

(21) Application number: **81900050.6**

(22) Date of filing: **05.12.80**

(86) International application number:
**PCT/HU80/00006**

(87) International publication number:
**WO 81/01746 25.06.81 Gazette 81/15**

(54) **CHROMATOGRAPHIC SHEET OF LAYER FOR PRESSURIZED LAYER CHROMATOGRAPHIC APPARATUS.**

(30) Priority: **06.12.79 HU Ci001995**

(43) Date of publication of application:
**30.12.81 Bulletin 81/52**

(45) Publication of the grant of the patent:
**30.10.85 Bulletin 85/44**

(84) Designated Contracting States:
**CH DE FR GB LI SE**

(56) References cited:
**DE-A-1 498 678**
**FR-A-2 138 020**
**GB-A-1 183 836**
**SU-A- 752 165**
**US-A-3 482 943**
**US-A-3 522 792**
**US-A-3 791 523**
**US-A-3 878 100**
**US-A-4 065 384**
**US-A-4 126 554**

(73) Proprietor: **"LABOR" MÜSZERIPARI MÜVEK**
**Rudas László ut.44**
**H-2501 Esztergom (HU)**

(72) Inventor: **TYIHAK, Ernö**
**Zápor u. 59**
**H-1132 Budapest (HU)**
Inventor: **MINCSOVICS, Emil**
**Vásárhelyi Kálmánt, 4**
**H-2000 Szentendre (HU)**
Inventor: **TETENYI, Peter**
**Népstadion ut. 9**
**H-1143 Budapest (HU)**
Inventor: **KALASZ, Huba**
**Hevesi Gyula u. 95**
**H-1157 Budapest (HU)**
Inventor: **NAGY, János**
**Jókai u. 2**
**H-2000 Szentendre (HU)**
Inventor: **KNOLL, József**
**Jászai Mari Tér 4/b**
**H-1137 Budapest (HU)**
Inventor: **ZOLTAN, Sándor**
**Sárköz u. 7/a**
**H-1142 Budapest (HU)**
Inventor: **LAK, István**
**Gellérthegy u. 3**
**H-1016 Budapest (HU)**

(74) Representative: **Gold, Tibor Zoltán et al**
**T.Z.GOLD & COMPANY 9, Staple Inn**
**London WC1V 7QH (GB)**

## Description

The invention relates to a chromatoplate, according to the pre-characterizing part of claim 1, including a sorbent layer supported on a carrier for use with overpressured layer chromatographic apparatuses, for the development of linear chromatograms.

Layer liquid-phase chromatography is a method whereby a mobile phase (solvent composition) travels in a stationary phase (a sorbent layer) and carries one or several substances at varying speed. The most significant process taking place during chromatography is the distribution of the travelling substances between the two phases.

A drawback of classical layer-chromatography is the long developing time and, due to the short length of the sorbent layer, the separation is not good and the theoretical plate number is limited.

Significant progress was made by development of the high performance thin layer chromatography (HPTLC) (A. Zkatkis and R. E. Kaiser: High Performance Thin-Layer Chromatography, Elsevier, 1977) which, contrary to classical layer chromatography, results in better resolution within a shorter developing time and over a shorter distance.

However, the most up-to-date-technique is the so-called overpressured layer chromatography (Hungarian Patent No. 173,749) realisable equally on thin and thick layers, and in which the separation is extremely fast. The main feature of overpressured layer chromatography is that the solvent system is caused to flow in the sorbent layer with overpressure in a closed system. The sorbent layer is completely covered, suitably with an elastic foil which is pressed against the sorbent layer by external pressure. The over (cushion) pressure (e.g. 2—10 bar) should always be higher than the flow pressure (e.g. 1—8 bar) of the liquid mobile phase. In this so-called pressurized ultramicron chamber, a better separation can be attained within a very short time (1—10 minutes) than in earlier known chromatographic methods using planar arrangements. An apparatus has been constructed for the development of both circular and linear chromatograms.

However, it is a fundamental problem of linear overpressured layer chromatography that as a result of the overpressure, the solvent escapes at the edges of the chromatoplate and that the solvent front is not straight, since circular, semicircular and quater-circular fronts arise around the place of the solvent admission, e.g. when solvent admission takes place at one point.

The aim of the present invention was the development of a chromatoplate that can be used in an overpressure layer chromatographic apparatus without the escape of developing solvent mixture at the edges and in which the solvent mixture travels with straight front. This aim is solved by a chromatoplate according to the characterizing part of claim 1.

The invention is based on the recognition that if the sorbent layer is suitably sealed at its edges, then the solvent cannot escape even when overpressured.

Furthermore, the invention is based on the recognition that if the sorbent layer at or near the place of admitting the solvent mixture is removed from the carrier plate in one or several thin strips, or if thin barriers, e.g. sheets, foils or wires, are placed directly in front of the place of solvent admission, a small solvent chamber is formed and the solvent mixture will then flow with a straight front.

Sealing of the edges of the sorbent layer according to the invention may be realised by impregnation. Alternatively, the sorbent layer may be mixed with powdered glass and subsequently sintered, wherein the edge regions contain a greater amount of glass than the central region of the layer, whereby when sintered, the glass in the edge regions melts and so is rendered impermeable but the glass in the central region does not melt and remains porous. Other materials may be used instead of glass. In a further variant, one recessed channel or several separate parallel recessed channels may be formed in the carrier and the sorbent material placed into the channel(s), whereby the carrier plate itself seals the edges. Alternatively, in the case of a ceramic sorbent layer, its edges may be glazed.

The impregnating or glazing materials should be insoluble in the solvent used for the chromatography, should not be altered as a result of the overpressure of the solvent mixture or under the given temperature conditions, and no chemical reaction should occur with the sorbent layer or the foil covering the sorbent layer.

Preferably, paraffin wax or a synthetic polymer solution or suspension or water-glass/sodium silicate/is used as the impregnating material. The edges of ceramic plates may be coated with white tinlead glaze.

For one-dimensional development, it is sufficient to seal the side edges of the layer and preferably also the edge upstream of the solvent flow direction. For two-dimensional development, however, it is necessary to seal the layer at all four edges. For two-directional, linear development with intermediate solvent-admission it is sufficient to seal the two opposite side edges, suitably the longer ones, of the sorbent layer.

The width of the sealing layer may vary between 0.05 and 3 cm, most favourably it is 1 cm or thinner. The length of the layer is preferably the same as that of the chromtographic plate.

The invention will now be described by way of example only with reference to the accompanying drawings in which:

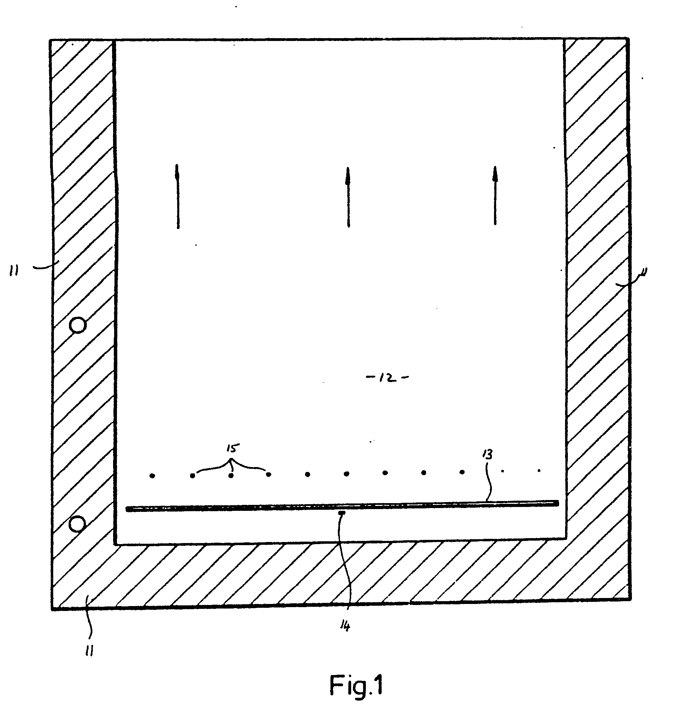

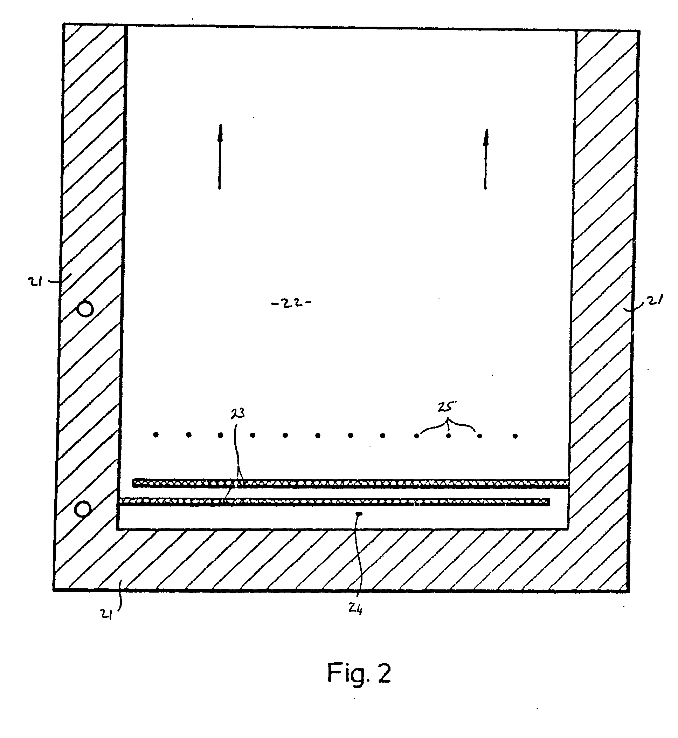

Figure 1 shows a schematic plan view of a chromatographic plate in which three edge regions 11 of a sorbent layer 12 are sealed and which includes a barrier in the form of a steel wire 13 located in front of the solvent admission point 14. A row of samples 15 are provided in front of (downstream of) the wire 13. Alternatively, the barrier may be a sorbent-free strip as described in connection with Figure 2.

Figure 2 shows a schematic plan view of a chromatographic plate in which three edge regions 21 of a sorbent layer 22 are sealed and which includes two strips 23 located in front of the solvent admission point 24, the strips being places from which sorbent material has been removed from the carrier, or which have been left uncoated with sorbent material; the samples to be developed are introduced at points 25.

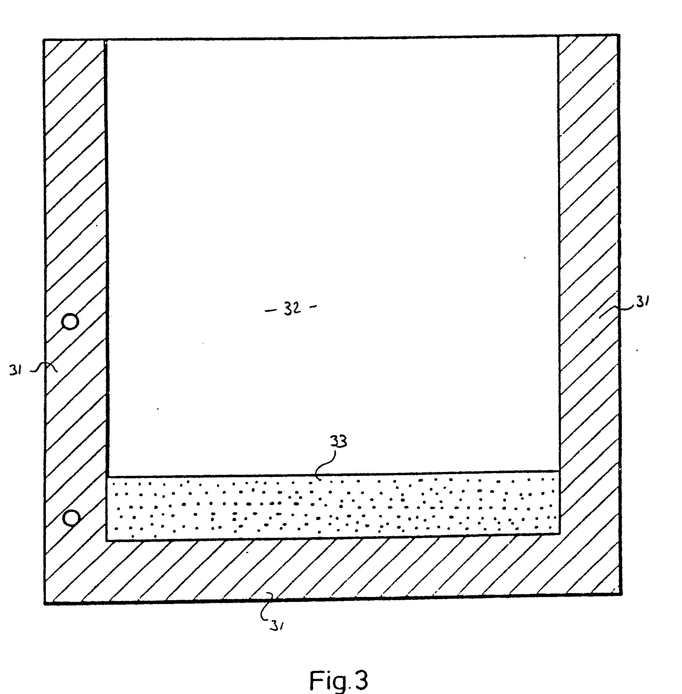

Figure 3 shows a schematic plan view of a chromatographic plate in which the edge regions 31 of a sorbent layer 32 are sealed and which is provided with a concentrating zone 33. This zone consists of non-sorbent material and so solvent fed into the zone migrates across the zone and spreads along the whole boundary between the concentrating zone 33 and the sorbent layer 32. In this way a straight solvent front is achieved. The sample is, in this case, placed on the sorbent layer.

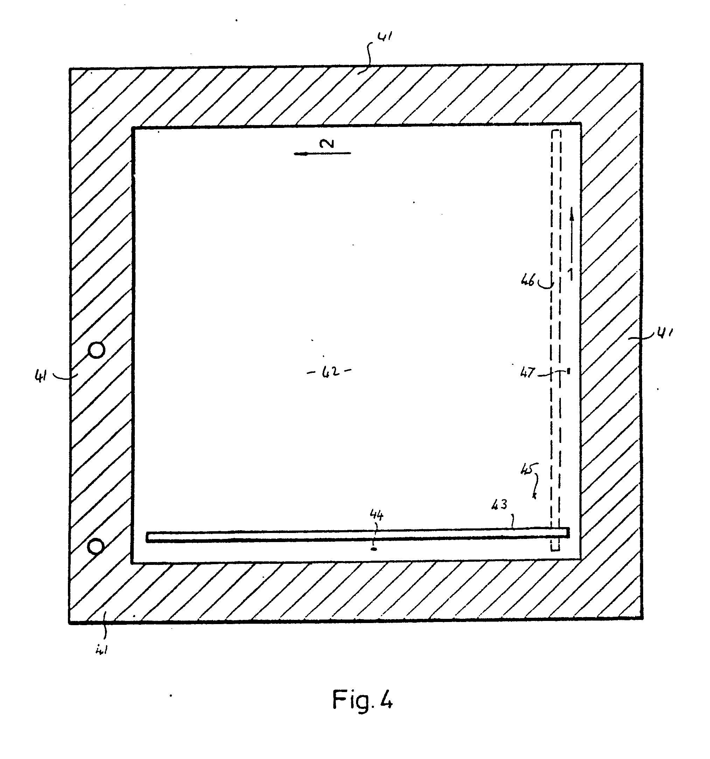

Figure 4 shows a schematic plan view of a chromatographic plate in which all four edge regions 41 of a sorbent layer 42 are sealed. A barrier 43 made of synthetic plastics material is placed between a solvent admission point 44 and a sample 45. The solvent travels in the direction of arrow 1. Optionally, a further barrier 46 may be placed in the position shown in broken lines and solvent introduced at point 47 so that the solvent front moves in the direction of arrow 2. Using this arrangement two-dimensional development can be achieved.

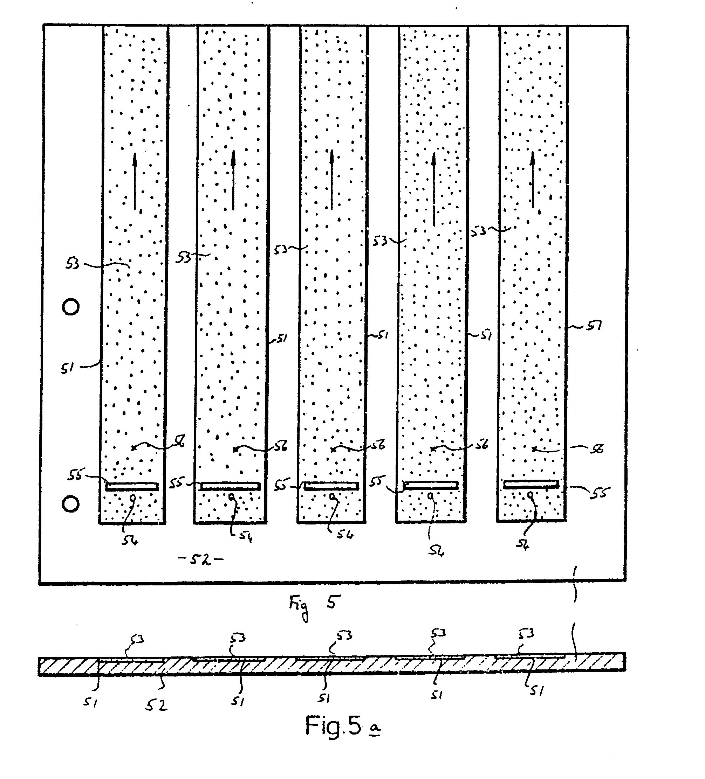

Figure 5 shows a schematic plan view of a chromatographic plate in which five recesses 51 are formed in a carrier 52, which recesses are each filled with a layer 53 of sorbent material to form channels of sorbent material that are closed at three edges by the carrier 52. In each channel, solvent is introduced at point 54, and a carrier 55 is placed between that point and a sample 56. Figure 5a is a cross-section of the plate shown in Figure 5.

The straight front of a developing solvent may ·be achieved according to the invention by removing the sorbent layer in one or more strips 0.1 to 0.5 mm wide at or near the place of solvent admission, thus leaving strips of the carrier sorbent-free. The maximum length of the so-formed strips may be the same as the width of the sorbent layer retained after coating the edges, but is preferably shorter than the width of the retained sorbent layer at each end of the strip(s). (Figure 1).

The strips may be longitudinally displaced in relation to each other (Figure 2). The maximum depth of the strips must not exceed the thickness of the sorbent layer. The number of strips may vary preferably between 1 and 4. Instead of strips, one or more barriers may be used; each barrier may be a 0.05 to 1.0 m diameter wire or a foil and is arranged behind the place or places of sample application. The maximum length of the or each barrier may be the same as the width of the retained sorbent layer after coating the edges but is preferably shorter than this width by 1—20 mm at each end. The barrier foils or wires can be longitudinally displaced in relation on each other. Their number is preferably 1—4. Preferably, a gapless synthetic plastics foil is used which is fixed by heating to the sorbent layer.

A so-called "concentrating zone" can also be formed in the solvent admission part of the sorbent layer, which layer is formed as described above and another layer is applied next to the sorbent layer to form the concentrating zone (Figure 3). The material used to make the concentrating zone may be for instance siliceous earth, powdered glass or synthetic plastics powder, or cellite, i.e. the materials are porous but not adsorbent, in contrast to the sorbent materials in the sorbent layer, (e.g. aluminium oxide, silica gel), but occasionally, a highly porous silica gel of large pore size is useable in the concentrating zone in conjunction with a low porosity, fine-grained sorbent layer. The so-formed two layers facilitate the development of the sample.

Preferably, a layer of fine-grained (0.5 to 10 μm), or normal (10—40 μm) material is used for the chromatographic sorbent layer according to the invention. Any sorbent layer available in the trade can be used for overpressured layer chromatography according to the invention. However, the sorbent layer may be prepared in house too.

The developing solvent composite does not escape on the edges of the sheet of layer according to the invention when overpressured and it advances with a straight front.

The invention is illustrated with the following non-limiting examples:

Example 1

110 ml 0.85% aqueous solution of a relatively highly polymerised homopolymeric polyacrylamide is added to 32 g silica gel powder of 4—8 μm grain size and 60 Å inside diameter. After thorough mixing, a 0.25 mm thick suspension is applied on degreased, 20×20 cm, 1.5 mm thick glass panels according to a known method. The layers dried at room temperature are of good mechanical strength even after activation.

Edges of the so-obtained and activated sorbent layer are impregnated to width of 10 mm, by dipping the panel on three sides into commercial paraffin wax melted at 130°C.

For directing the solvent, a 0.2 mm diameter steel wire is placed in front of the solvent admission point as shown in Figure 1. Using methylene chloride solvent, authentic dye materials (butter-yellow, Sudan G and indophenol) can be well separated in a pressurized ultramicron chamber at 1.0 MPa over (cushion) pressure, with 10 minutes development time, over a distance of 15 cm.

Example 2

The procedure is the same as in Example 1, but in place of 32 g silica gel powder, 30 g neutral aluminium oxide of 15—20 µm grain size is used, applied with a thickness of 0.3 mm.

Example 3

100 ml 1.8% aqueous solution of a polymer product of acrylamide and anionic acrylic acid mixture having a low polymerisation degree is added to silica gel powder of 4—5 µm grain size and 60 Å inside diameter. After thorough mixing the suspension is applied in a thickness of 0.3 mm onto 20×40×0.4 mm thick polyethylene terephthalate foil. The layers dried at 75°C have adequate strength even after activation. Immediately after the sorbent layer application and before the previously described drying, for the subsequent solvent control a 2 mm wide, 0.3 mm thick and 185 mm long polyethylene-teraphthalate foil is placed in front of, i.e. down-stream of, the intended place of solvent admission 15 mm from the sealed edge of the plate and at equal distances from the two side edges of the plate, which will also be impregnated (for a schematic diagram, see Figure 1). This foil sticks into the layer during the drying process.

Edges (on three sides) of the so-obtained dried plate provided with the control barrier (foil) are impregnated by dipping it into a 1.5% aqueous solution of highly polymerised, non-ionic polyacrylamide homopolymer to a width of 5 mm and dried at room temperature.

On the so-formed plate, Digital glycosides were effectively separated in linear pressurised ultramicron chamber using methyl ethyl ketone developer over a distance of 35 cm, at 1.0 MPa over (cushion) pressure, in 18.5 minutes.

Example 4

The procedure is the same as in Example 2, but two strips devoid of sorbent material each 3 mm wide are formed for the solvent control (see schematic diagram in Figure 2).

Example 5

100 ml 2% aqueous solution of polyvinyl acetate is added to 26 g silica gel powder of 8—10 µm grain size and 60 Å inside diameter. Simultaneously, 30 ml 2% aqueous polyvinyl acetate suspension is added to 8 g siliceous earth of 10—20 µm grain size. The two systems are homogenized in separate electric homogenizers for one minute, then the two obtained suspensions are poured into two generally side-by-side troughs, and applied to a 0.2 mm thick 20×20 cm carrier plate in the form of an aluminium foil in the usual way. Thus, a 0.25 mm thick, two-zone sorbent layer is obtained, in which the width of one zone, the inactive zone, is 40 mm (Figure 3). The other zone is of course active.

Before drying of the sorbent layer and immediately after its application, a 0.3 mm thick, 1 mm wide, 160 mm long polyethylene terephthalate barrier foil is placed in front of the intended place of solvent admission at a distance of 15 mm from the rear edge of the plate and at an equal distance from the two side edges to be impregnated for the purpose of the subsequent solvent control.

Then the sorbent layer is dried, and possibly activated.

Impregnation of the layer's edge in this case was performed as described in Example 3.

When placed on the so-formed layer in a position in front of the barrier foil and the solvent admission point, components (sesquiterpenoids) of volatile oil samples obtained from the inflorescence of the Matricaria chamonmilla L. By steam distillation were effectively separated in a linear pressurized chamber with benzene as solvent at 0.7 MPa (over cushion) pressure with 20 ml/h solvent volumetric velocity over a distance of 15 cm, in 12 minutes.

Example 6

The procedure is the same as in Example 5, but 7 g cellite powder of 10—20 µm grain size is used instead of the 8 g siliceous earth.

Example 7

36 g magnesium-silicate powder of 6—10 µm grain size and 110 g 6°Be sodium silicate aqueous solution is homogenized in an electric mixer and applied by a standard method on a suitably cleaned 1.5 mm thick glass panel, then the plates so prepared are stored in a chamber at 75% relative humidity for 2.5 hours, then removed and dried at room temperature. Thus, an adequately stable layer is obtained.

The edges of the so-prepared plates are impregnated as described in Example 1, and the plates can be used similarly for the effective separation of dye materials.

Example 8

The procedure is the same as described in Example 3, except that the two side long edges of the sorbent layer are impregnated again before drying of the sorbent layer, by dipping them into a 1.5% aqueous solution of highly polymerised non-ionic polyacrylamide homopolymer and at the same time a 1 mm thick strip devoid of sorbent material is made in the centre of the layer at the instead place of solvent admission for the subsequent solvent control and two-directional development, then the layer is dried and used for development.

Example 9

The procedure is the same as that described in Example 7, except that the layer is made suitable for two-dimensional development by impregnating it on all four sides. Firstly a sample is developed in one dimension making use of only three impregnated edges and subsequently developing it again in a direction at right angles to the first development direction, but before this development, one has to impregnate the fourth edge as well, as shown in Figure 4.

Example 10

Six recessed channels of 0.3 mm depth are

formed in a 20×20 cm, 2 mm thick aluminium plate, into which paste made of polyamide 11 powder of 8—10 µm grain size is applied (25 g polyamide powder is mixed in 100 ml 1.5% aqueous polyvinyl acetate solution, followed with homogenisation for 1 minute). 15 mm wide walls along the edges of the plate and 20 mm wide walls on the side upstream of the solvent-flow direction are formed, while the walls separating the channels from each other have a smooth top surface of 10 mm width. In order to ensure a straight solvent-front 16×3×0.3 mm synthetic foil (polyethylene) is arranged in front of each of the six solvent admission openings, as shown in Figure 5. Application of the samples took place 12 mm from the solvent admission opening.

Example 11

The procedure is the same as in Example 1, but the applied silica gel contains manganese-activated zinc-silicate, as fluorescent material.

**Claims**

1. A chromoplate comprising a layer of sorbent material supported on a carrier plate for use with overpressured layer chromatographic apparatus for the development of linear chromatogram, characterised in that the sorbent layer is sealed at at least its two side edges and either the sorbent layer is removed in one or several strips at or near the place of solvent admission, or one or several barriers are arranged in contact with the sorbent layer near to and down-stream from the place of solvent admission relative to the flow direction.

2. A plate as claimed in claim 1, characterised in that the sorbent layer is provided with a concentrating zone extending across the width of the sorbent layer and including the place of solvent admission.

3. A chromoplate as claimed in claim 1, characterised in that the solvent layer is sealed by impregnation or, in the case of a sorbent layer made from ceramic material, with a coat of glaze.

4. A chromoplate as claimed in claim 1 characterised in that the sorbent layer includes sintered glass in such a manner that the porosity of the layer is different at the edges of the layer as compared to the centre of the plate.

5. A chromoplate as claimed in claim 1, characterised in that one or several recessed channels are formed in the carrier plate and the sorbent layer is placed in these channels.

6. A chromoplate as claimed in claim 1, characterised in that the width of the edge seals is in the range of from 0.05 to 3.0 cm, preferably 0.1—1 cm.

7. A chromoplate as claimed in claim 1 characterised in that the sorbent layer is sealed with paraffin wax or a synthetic polymeric solution, or suspension or with water-glass, or white tin-lead glaze.

8. A chromoplate as claimed in claim 1, characterised in that the sorbent layer is sealed at two, three or four edges.

9. A chromoplate as claimed in claim 1, characterised in tht the or each strip devoid of sorbent material has a width of from 0.1 to 5.0 mm and a length that is the same as the width of the sorbent layer remaining after sealing of its edges, or shorter than the width of the remaining sorbent layer by from 1 to 20 mm at each of its ends and the depth of the or each strip is not greater than the maximum thickness of the sorbent layer.

10. A chromoplate as claimed in claim 1 or claim 9, characterised in that from 1 to 4 strips are formed, which may be longitudinally displaced in relation to each other.

11. A chromoplate as claimed in claim 1, characterised in that the or each barrier is a narrow foil, the width and the height of which are from 0.05 to 1.00 mm, and the maximum length of which is the same as the width of the sorbent layer remaining after coating of its edges and preferably is shorter than the remaining sorbent layer width by 1 to 20 mm at each end of the foil.

12. A chromoplate as claimed in claim 1, characterised in that the or each barrier is in the form of a wire, the diameter of which is from 0.5 to 1.00 mm, and the maximum length of which is the same as the width of the sorbent layer remaining after coating of its edges and preferably is shorter than the remaining sorbent layer width by 1—20 mm at each end of the wire.

13. A chromoplate as claimed in any one of claims 1, 11 or 12, characterised in that from 1 to 4 barriers are arranged, which may be longitudinally displaced in relation to each other.

14. A chromoplate as claimed in claim 2, characterised in that the concentrating zone is made from siliceous earth, powdered glass or cellite.

**Patentansprüche**

1. Chromatographieplatte mit einer Schicht aus Sorptionsmaterial, welches von einer Trägerplatte getragen wird, für eine Überdruck-Schichtchromatographie-Vorrichtung zur Entwicklung eines linearen Chromatogramms, dadurch gekennzeichnet, daß die Sorptionsschicht an wenigstens zweien ihrer Ränder abgedichtet ist und entweder die Sorptionsschicht in einem oder mehreren Streifen an oder nahe am Ort der Lösungsmittelzufuhr entfernt ist oder eine oder mehrere Sperren in Berührung mit der Sorptionsschicht nahe an der Stelle der Lösungsmittelzufuhr in Fließrichtung stromabwärts dieser Stelle angeordnet sind.

2. Chromatographieplatte nach Anspruch 1, dadurch gekennzeichnet, daß die Sorptionsschicht mit einer Konzentrierungszone versehen ist, die sich über die Breite der Sorptionsschicht hin erstreckt und die Stelle der Lösungsmittelzufuhr enthält.

3. Chromatographieplatte nach Anspruch 1, dadurch gekennzeichnet, daß die Sorptionsschicht durch Imprägnieren oder, im Falle einer Sorptionsschicht aus Keramikmaterial, mit einer Beschichtung aus Lasur abgedichtet ist.

4. Chromatographieplatte nach Anspruch 1, dadurch gekennzeichnet, daß die Sorptionsschicht gesintertes Glas derart enthält, daß die Porosität der Schicht an den Rändern der Schicht von der im Zentrum der Platte verschieden ist.

5. Chromatographieplatte nach Anspruch 1, dadurch gekennzeichnet, daß ein oder mehrere ausgesparte Kanäle in der Trägerplatte ausgebildet sind und die Sorptionsschicht in diesen Kanälen angeordnet ist.

6. Chromatographieplatte nach Anspruch 1, dadurch gekennzeichnet, daß die Breite der Randdichtungen im Bereich von 0,05 bis 3,0 cm, vorzugsweise 0,1 bis 1 cm liegt.

7. Chromatographieplatte nach Anspruch 1, dadurch gekennzeichnet, daß die Scrptionsschicht mit Paraffinwachs oder einer synthetischen Polymerlösung oder einer Suspension oder mit Wasserglas oder mit einer Zinn-Blei-Lasur abgedichtet ist.

8. Chromatographieplatte nach Anspruch 1, dadurch gekennzeichnet, daß die Sorptionsschicht an zwei, drei oder vier Rändern abgedichtet ist.

9. Chromatographieplatte nach Anspruch 1, dadurch gekennzeichnet, daß der oder jeder Streifen, der frei von Sorptionsmaterial ist, eine Breite von 0,1 bis 5,0 mm und eine solche Länge hat, die derjenigen der nach dem Abdichten der Ränder der Sorptionsschicht verbleibenden Breite der Sorptionsschicht entspricht oder um 1 bis 20 mm kürzer als die verbleibende Sorptionsschicht an jedem seiner Enden ist und daß die Tiefe des oder jedes Streifens nicht größer als die maximale Dicke der Sorptionsschicht ist.

10. Chromatographieplatte nach Anspruch 1 oder 9, dadurch gekennzeichnet, daß 1 bis 4 Streifen ausgebildet sind, die gegeneinander längsversetzt sei können.

11. Chromatographieplatte nach Anspruch 1, dadurch gekennzeichnet, daß die oder jede Sperre eine schmale Folie ist, deren Breite und Höhe von 0,05 bis 1,00 mm beträgt und deren maximale Länge der nach der Beschichtung der Ränder der Sorptionsschicht verbleibenden Breite derselben entspricht und vorzugsweise um 1 bis 20 mm kürzer als die verbleibende Sorptionsschichtbreite an jedem Ende der Folie ist.

12. Chromatographieplatte nach Anspruch 1, dadurch gekennzeichnet, daß die oder jed Sperre die Forme eines Drahtes hat, dessen Durchmesser von 0,5 bis 1,00 mm begrägt und dessen maximale Länge der nach der Beschichtung der Ränder der Sorptionsschicht verbleibenden Breite derselben entspricht und vorzugsweise um 1 bis 20 mm kürrzer als die verbleibende Sorptionsschichtbreite an jedem Ende des Drahtes ist.

13. Chromatographieplatte nach einem der Ansprüche 1, 11 oder 12, dadurch gekennzeichnet, daß 1 bis 4 Sperren angeordnet sind, die gegeneinander in Längsrichtung versetzt sein können.

14. Chromatographieplatte nach Anspruch 2, dadurch gekennzeichnet, daß die Konzentrierungszone aus kieselsäurehaltiger Erde, zerpulvertem Glas oder Cellit ist.

**Revendications**

1. Une plaque de chromatographie comportant une couche d'un matériau adsorbant supportée par un substrat pour utilisation dans un appareil chromatographique à couche surpressée pour le développement d'un chromatogramme linéaire, caractérisée en ce que la couche adsorbante est scellée sur au moins deux de ses côtés et en ce que, soit la couche d'adsorbant est retirée en une ou plusieurs bandes à ou au voisinage de l'endroit d'admission du solvant, ou une ou plusieurs barrières sont disposées en contact avec la couche adsorbante au voisinage et en aval de l'endroit d'admission du solvant par rapport à la direction d'écoulement.

2. Une plaque selon la revendication 1, caractérisée en ce que la couche adsorbante est prévue avec une zone de concentration s'étendant à travers la largeur de la couche adsorbante et incorporant les endroits d'admission du solvant.

3. Une plaque chromatographique selon la revendication 1, caractérisée en ce que la couche adsorbante est scellée par imprégnation, ou dans le cas d'une couche adsorbante faite de matériau céramique revêtue par un vernis.

4. Une plaque chromatographique selon la revendication 1, caractérisée en ce que la couche adsorbante comporte un verre fritté de telle manière que la porosité de la couche soit différente sur les côtés de la couche par comparaison avec celle au centre de la plaque.

5. Une plaque chromatographique selon la revendication 1, caractérisée en ce qu'un ou plusieurs canaux creusés sont formés dans la plaque de substrat et en ce que la couche adsorbante est placée dans ces canaux.

6. Une plaque chromatographique selon la revendication 1, caractérisée en ce que la largeur des scellements de côtés est comprise entre 0,05 et 3 cm, de préférence 0,1 à 1 cm.

7. Une plaque chromatographique selon la revendication 1, caractérisée en ce que la couche adsorbante est scellée avec de la cire de paraffine ou une solution de polymère synthétique ou une suspension de verre soluble, ou avec un vernis à l'étain-plomb.

8. Une plaque chromatographique selon la reendication 1, caractérisée en ce que la couche adsorbante est scellée selon deux, trois ou quatre côtés.

9. Une plaque chromatographique selon la revendication 1, caractérisée en ce que la ou chacune des bandes recevant le matériau adsorbant a une largeur de 0,1 à 5 mm, et un longueur qui est la même que la largeur de la couche adsorbante restante après scellement sur ses côtés ou est plus courte que la largeur de la partie restante de la couche adsorbante de 1 à 20 mm à chacune de ses extrémités, et en ce que la profondeur de chaque bande n'est pas plus grande que l'épaisseur maximale de la couche adsorbante.

11. Une plaque chromatographique selon l'une des revendications 1 ou 9, caractérisée en ce qu'une quatre bandes sont formées qui peuvent être décalées longitudinalement en relation l'une par rapport à l'autre.

11. Une plaque chromatographique selon la revendication 1, caractérisée en ce que la ou chacune des barrières est une feuille étroite, dont la largeur et la hauteur est comprise entre 0,05 et 1 mm et la longueur maximale est la même que la largeur de la couche adsorbante restante après revêtement de ses côtés et de préférence est plus courte que la largeur restante de la couche adsorbante de 1 à 20 mm à chacune des extrémités de la feuille.

12. Une plaque chromatographique selon la revendication 1, caractérisée en ce que la ou chaque barrière se présente sous la forme d'un fil, le diamètre de celui-ci étant compris entre 0,5 et 1 mm et la longueur maximale étant la même que la largeur de la couche adsorbante restante après revêtement de ses côtés et de préférence est plus courte que la largeur restante de la couche adsorbante de 1 à 20 mm à chaque extrémité du fil.

13. Une plaque chromatographique selon l'une quelconque des revendications 1, 11 ou 12, caractérisée en ce qu'une à quatre barrières sont utilisées, qui peuvent être longitudinalement décalées en relation l'une par rapport à l'autre.

14. Une plaque chromatographique selon la revendication 2, caractérisée en ce que la zone de concentration est faite de terre de silice, de poudre de verre ou de cellite.

Fig.1

Fig. 2

Fig. 3

Fig. 4

Fig 5

Fig. 5 a